(19) Europäisches Patentamt
European Patent Office
Office européen des brevets

(11) **EP 0 769 186 B1**

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(21) Anmeldenummer: **95924897.2**

(22) Anmeldetag: **21.06.1995**

(51) Int Cl.⁶: **G11B 23/037**

(86) Internationale Anmeldenummer:
**PCT/EP95/02413**

(87) Internationale Veröffentlichungsnummer:
**WO 96/01472 (18.01.1996 Gazette 1996/04)**

(54) **WICKELKERN FÜR BANDFÖRMIGE INFORMATIONSTRÄGER**

WINDING HUB FOR TAPE-LIKE INFORMATION CARRIERS

MOYEU D'ENROULEMENT DE BANDES DE SUPPORT D'INFORMATIONS

(84) Benannte Vertragsstaaten:
**AT DE FR GB**

(30) Priorität: **04.07.1994 DE 9410713 U**

(43) Veröffentlichungstag der Anmeldung:
**23.04.1997 Patentblatt 1997/17**

(73) Patentinhaber: **EMTEC Magnetics GmbH
67059 Ludwigshafen (DE)**

(72) Erfinder:
• **SCHNEIDER, Alfred
F-67800 Hoenheim (FR)**
• **LUTZ, Gottfried
D-82229 Seefeld (DE)**
• **LIEPOLD, August
D-81369 München (DE)**
• **SCHOLTYSIK, Bernd
D-81673 München (DE)**
• **THIELE, Hartmut
D-81477 München (DE)**

(56) Entgegenhaltungen:
EP-A- 0 499 880          DE-A- 4 204 168
DE-U- 9 400 220          US-A- 3 632 053
US-A- 4 923 137

## Beschreibung

Wickelkern für streifen- oder bandförmige Informationsträger, wobei die Breite der äußeren Wickelfläche des Wickelkerns wenigstens der Breite des Informationsträgers entspricht, der Wickelkern aus einem Außen- und einem Innenring besteht, die radial miteinander durch elastisch verformbare, radial und in Umfangsrichtung verlaufende Federelemente verbunden sind, um eine relative Bewegung des Außenringes gegenüber dem Innenring, in dessen Umfangsrichtung zu unterbinden, und der Wickelkern einen Innen- und Außenumfang mit einem Innen- bzw. Außendurchmesser besitzt, wobei der Wickelkern beim Aufwickeln des Informationsträgers ein Kompressionsverhältnis des komprimierten Innendurchmessers zum komprimierten Außendurchmesser von weniger als 1:4 aufweist.

Mit dem DE-GM 9400220 ist obenbeschriebener Wickelkern mit Federelementen bekannt, die demselben eine gewisse Elastizität in Radialrichtung verleihen.

Ein derartiger Wickelkern wird zum Aufwickeln von Magnetbändern nach dem Schneiden verwandt und der bewickelte Wickelkern wird an Kassetten-Ladefirmen oder Kassetten-Bespielfirmen geliefert. Diese Firmen spannen die Wickelkerne auf Spulmaschinen auf, die mittels eines Aufnahmemechanismus in den einzelnen Wickelkern eingreifen und diesen vom Innenumfang her festspannen.

Diese Aufnahmemechanismen haben einen begrenzten Spannweg. Der Innenring des Wickelkerns wird durch den Mechanismus aufgefedert und setzt dieser Auffederung wenig Widerstand entgegen. Dadurch wird der Wickelkern nicht mit der notwendigen Festigkeit auf dem Mechanismus gehalten und es kann durch Lösen und Wegfliegen des Bandwickels und/oder des Kerns zu Unfällen kommen.

Es ist Aufgabe der vorliegenden Erfindung, einen Wickelkern der eingangs genannten Art bereitzustellen, der eine ausreichende Aufspannsicherheit aufweist.

Die Aufgabe wird mit einem Wickelkern für streifen- oder bandförmige Informationsträger, wobei die Breite der äußeren Wickelfläche des Wickelkerns wenigstens der Breite des Informationsträgers entspricht, der Wickelkern aus einem Außen- und einem Innenring besteht, die radial miteinander durch elastisch verformbare, radial und in Umfangsrichtung verlaufende Federelemente verbunden sind, um eine relative Bewegung des Außenringes gegenüber dem Innenring, in dessen Umfangsrichtung zu unterbinden, und der Wickelkern einen Innen- und Außenumfang mit einem Innen- bzw. Außendurchmesser besitzt, wobei der Wickelkern beim Aufwickeln des Informationsträgers ein Kompressionsverhältnis des komprimierten Innendurchmessers zum komprimierten Außendurchmesser von weniger als 1:4 aufweist, gelöst, durch Begrenzerelemente, die zentralsymmetrisch angeordnet sind und im wesentlichen radial wirken und im Falle einer Durchmesservergrößerung (Expansion) des Innenrings diese begrenzen.

In einer ersten praktischen Ausbildung wird mittels der Begrenzerelemente die wirksame Federlänge zumindest eines Teils der Federelemente verkleinert, genauer, verkürzt, was zu einer Vergrößerung der Kraftübertragung zwischen Innen- und Außenring führt. Die Federsteifigkeit wird vergrößert und die "Feder" wird härter.

In einer zweiten praktischen Ausführung wird mittels der Begrenzerelemente bei einer definierten Durchmesservergrößerung (Expansion) des Innenrings eine Abstützung des Innenringes am Außenring hergestellt.

Beide Lösungen ergeben dasselbe Resultat, nämlich eine Begrenzung einer Durchmesservergrößerung des Innenringes.

Damit wird erreicht, daß mit jeweils einer relativ einfachen Änderung die Betriebssicherheit der Wickelkerne beträchtlich erhöht wird.

In vorteilhafter Ausbildung bestehen die Federelemente aus im wesentlichen S-förmigen Stegen mit einem Umfangsteil und Radialteilen an den Enden.

Zweckmäßig kann der Umfangsteil der S-förmigen Stege im Winkelbereich von etwa 85° bis etwa 95° relativ zu einem Radius des Wickelkerns angeordnet sein.

In vorteilhafter Ausgestaltung ist das Begrenzerelement als Begrenzersteg ausgebildet, der den in Umfangsrichtung verlaufenden Umfangsteil des Federelements mit dem Innenring des Wickelkerns verbindet.

In weiterer Ausgestaltung kann als Begrenzerelement auch ein an einem der Innen- und/oder Außenringe vorgesehener Begrenzeranschlag vorgesehen sein.

Mittels der Stege bzw. Anschläge wird erreicht, daß im Falle einer Durchmesservergrößerung (Expansion) des Innenringes des Wickelkerns der Weg der Durchmesservergrößerung des Innenringes begrenzt wird und dadurch eine Mindest-Haltekraft auf der Kernaufnahme sichergestellt ist.

Zwischen dem Begrenzeranschlag und dem gegenüberliegenden Wikkelkernteil kann zweckmäßig ein Schlitz mit einer Breite zwischen etwa 0,15 und 0,4 mm vorgesehen sein.

In Weiterbildung der Erfindung ist durch unterschiedliche Anordnung des Begrenzersteges über die Länge des Umfangsteils zwischen den Radialteilen des Federelements dessen wirksame Federkonstante einstellbar.

Dadurch läßt sich also - abgesehen von der beabsichtigten Wegbegrenzung - die Federsteifigkeit der Federelemente des Wickelkerns generell wie gewünscht einstellen.

Zweckmäßig ist eine durch 3 teilbare Anzahl von Federelementen und Begrenzerelementen.

Der Wickelkern kann günstig aus thermoplastischem Material ohne oder höchstens mit geringem Füllstoffanteil bestehen.

Die Dicke der Begrenzerstege kann etwa der halben Dicke der Federelemente entsprechen.

In spezieller Ausbildung kann auch jedem Federelement ein Begrenzerelement zugeordnet sein.

In weiterer Ausbildung können wenigstens 3 als Begrenzeranschläge ausgebildete Begrenzerelemente vorgesehen sein.

Es ist praktisch günstig, wenn der Innenring teilweise hohl (U-Form) ausgebildet und mit Verstärkungsstegen versehen ist, dessen Anzahl sich an der Zahl der Federelemente orientiert oder mehrfach so groß ist.

Ausführungsformen von Wickelkernen nach der Erfindung sind in der Zeichnung dargestellt und nachfolgend beschrieben.

Die Zeichnung zeigt in

| Figur 1A | einen Wickelkern mit Begrenzerstegen in Vorderansicht |
| Figur 1B | den Wickelkern nach Figur 1A in Rückansicht |
| Figur 1C | eine Schnittdarstellung des Wickelkerns gemäß Figur 1, Schnittlinie A-A |
| Figur 2 | einen Wickelkern mit Begrenzeranschlägen |
| Figur 2A | eine Schnittdarstellung des Wickelkerns gemäß Figur 2, Schnittlinie B-B |
| Figur 2B | eine Variante des Wickelkerns aus Figur 2 mit jeweils doppelten Begrenzeranschlägen, im Querschnitt |
| Figur 3 | eine Alternativausbildung mit Begrenzerstegen plus Begrenzeranschlägen in Ausschnittsdarstellung |
| Figur 4 | einen Aufnahme-Mechanismus mit einem Wickelkern. |

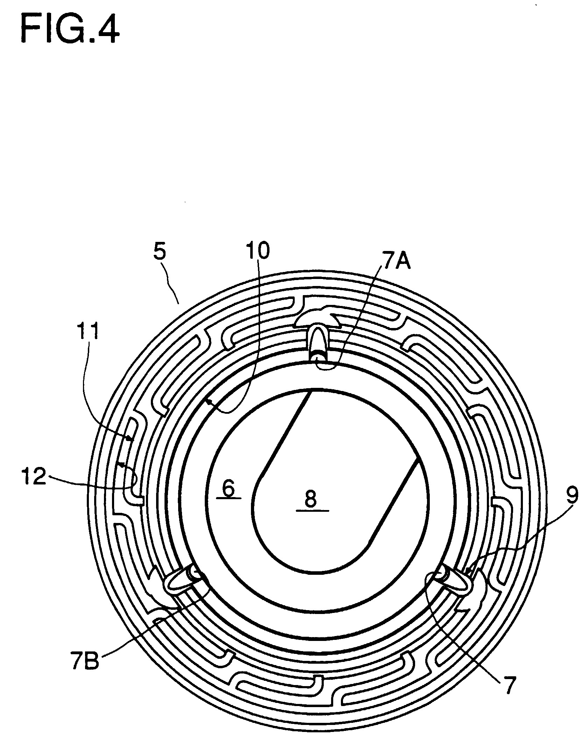

In Figur 4 ist ein Wickelkern 5 auf einem Aufspann-Mechanismus 6 einer Spuleinrichtung, z. B. für die Herstellung von unbespielten Kassetten, aufgespannt.

Gehalten wird der Wickelkern 5 mittels dreier Zapfen 7, die durch die Klappbewegung einer Klapplasche 8 radial nach außen, beispielsweise in die Mitnehmeraussparungen 9 des Wickelkerns, mit Druck bewegt werden. Die drei Zapfen können auch an anderen Stellen am Innenumfang anliegen.

Mit 7A ist die Lage der Zapfen in der Ruhelage bezeichnet.

Durch den Radialdruck des Aufspann-Mechanismus 6 wird der Innenring 10, der unter Zwischenschaltung von "etwa S-Form"-Federelementen 11 mit dem Außenring 12 verbunden ist, im Umfang aufgeweitet.

Ohne die noch zu beschreibenden erfindungsgemäßen Maßnahmen ist beim Auf spannvorgang die Haltekraft des Wickelkerns 5 unter Umständen nicht ausreichend groß, da der Innenring nachgibt, was zum Lösen des Wickelkerns 5 bei hohen Drehzahlen führen kann.

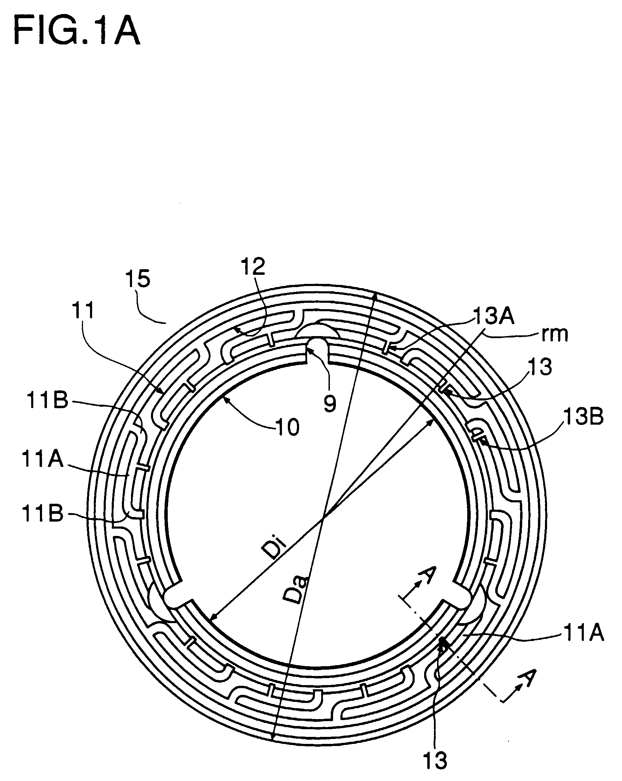

Figuren 1A, 1B zeigen einen Wickelkern 15, der sich vom Wickelkern 5 dadurch unterscheidet, daß die ebenfalls "etwa S-Form"-Federelemente 11, die aus einem längeren Umfangsteil 11A und kürzeren "etwa Radialteilen" 11B bestehen, über einen Begrenzersteg 13 mit dem Innenring 10 des Wickelkerns 15 verbunden sind. In Figur 1A, 1B ist der Begrenzersteg 13 etwa halb so dick wie die Dicke des Federelements 11 und ist etwa rechts vom Mittelradius rm des Federelements ebenfalls radial angeordnet (alle Quadranten außer dem Quadranten oben rechts). Im Quadranten oben rechts in Figur 1A sind drei verschiedene Anordnungen des Begrenzerstegs 13 als 13A in der Nähe des rechten Radialteils bzw. in der Nähe des linken Radialteils als 13B dargestellt, um zu zeigen, daß die Federkraft von ca. 90 % (13A) bis etwa 10 % (13B) durch die Wahl der Anordnung des Begrenzersteges variierbar ist. Damit ist also auch, wenn keine Umfangs-Federwegbegrenzung angestrebt ist, die Federkraft eines Wickelkerns bei unveränderter Form der Federelemente 11 ohne Schwierigkeit geeignet einstellbar.

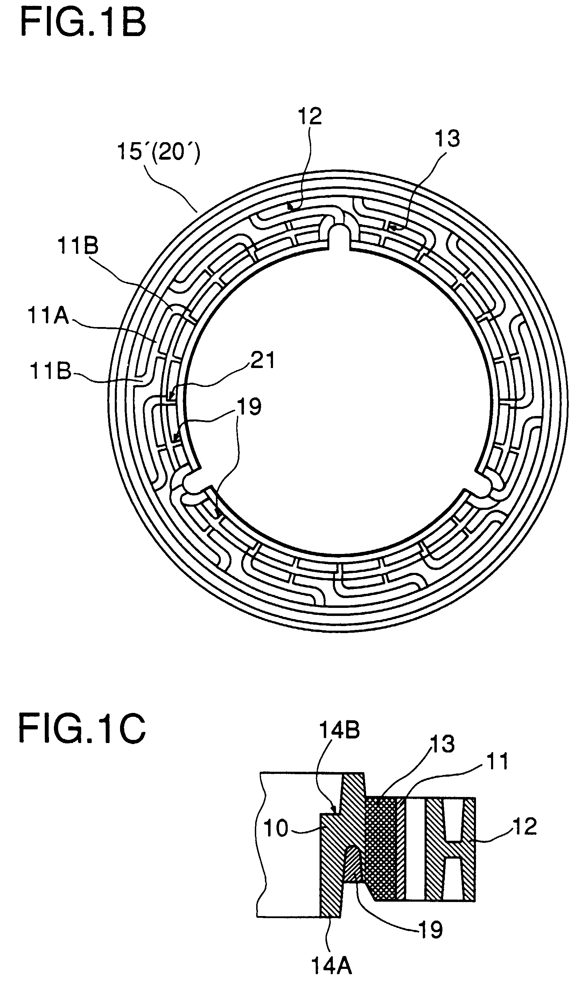

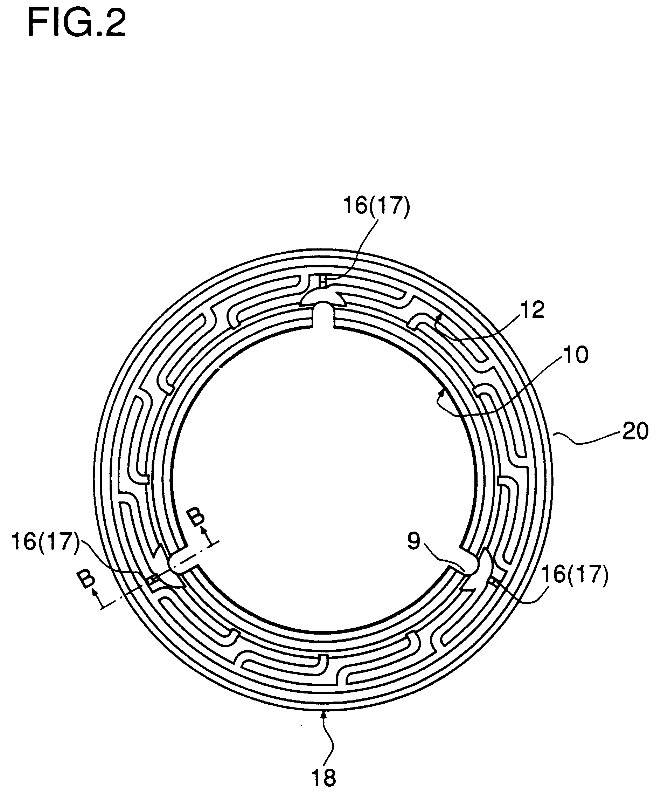

In Figur 1C ist der Wickelkern im Querschnitt gemäß Schnittlinie A-A in Figur 1A dargestellt. Der geschnittene Begrenzungssteg 13 ist kreuzschraffiert sichtbar. Verstärkungsstege 19, in Figur 1B sichtbar, können am Innenring 10 vorgesehen sein. Entweder an den Radien, auf denen die Begrenzungsstege 13 angeordnet sind oder noch zusätzlich auf den Radien, auf denen die nach innen weisenden Radialteile 11B der Federelemente 11 liegen. Damit wird eine sehr stabile und spritzgußtechnisch günstige Ausbildung verwendet.

In Figuren 1A und 1B ist erkennbar, daß der Außenring 12 eine Doppel-T-Struktur aufweist, die eine gute Festigkeit bei niedrigem Gewicht und mit thermoplastischem Material ohne Glasfasern oder sonstigem Füllmittel realisierbar macht. Der Außenring 12 kann auch jede andere festigkeitsmäßig geeignete Ausbildung besitzen.

Der Innenring 10 kann auch, wie gezeigt, mit Vorsprüngen und entsprechenden Vertiefungen 14A bzw. 14B zum Übereinanderstapeln mehrerer Wickelkerne 15 ausgebildet sein.

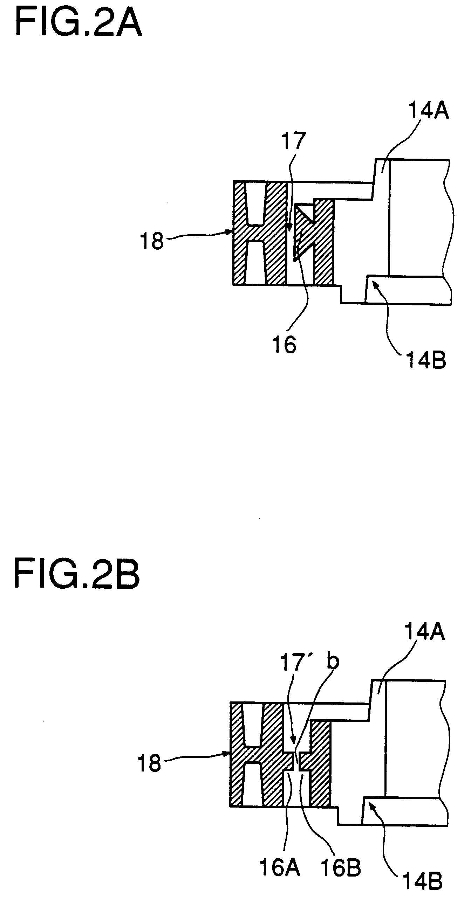

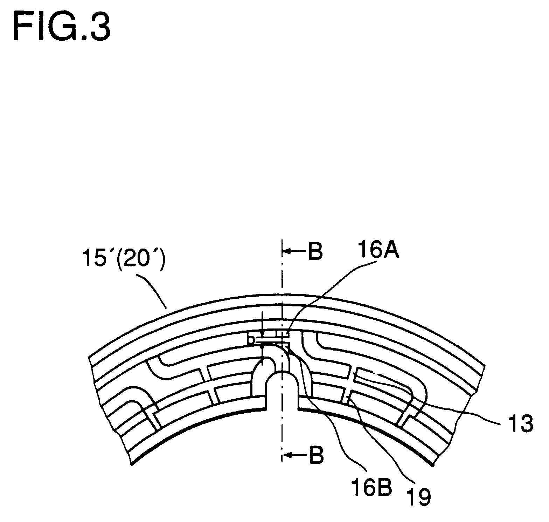

Figur 2 zeigt als eine erfindungsgemäße Variante einen Wickelkern 20, der mit Begrenzeranschlägen 16, jeweils auf den Radien der Mitnehmeraussparungen 9 angeordnet, ausgebildet ist. Die Begrenzeranschläge 16 sind mit einer Breite a von ca. 2 mm ausgeführt und besitzen einen Schlitz 17 (in Figur 2A erkennbar) mit einer vorbestimmten Schlitzbreite b, die sich nach den Spannwegen und Toleranzen der auf dem Markt befindlichen Aufspann-Mechanismen richtet. Im allgemeinen kann die Schlitzbreite b etwa 0,15 bis etwa 0,4 mm betragen. In Figur 2B ist eine Variante mit je einem Begrenzeranschlag 16A und 16B am Außenring 12 und Innenring 10 dargestellt, wobei Einfallstellen am Innenring 10 herstellungsmäßig vermieden werden. Für die Breite b des Schlitzes 17' gilt der oben erwähnte Bereich. Es ist, wie in Figur 3 gezeigt, auch möglich, Begrenzeranschläge 16A, 16B und Begrenzerstege 13 gleichzeitig zu verwenden.

Die Wickelkern-Ausführungen gemäß Figur 1 und 2 wurde bezüglich ihrer Haltekraft auf einem Aufspann-Mechanismus der Fa. Tapematic, Italien getestet.

Die zu messenden Wickelkerne wurden normal aufgespannt und mit je 120° versetzten Zugdrähten verbunden. Die Zugdrähte wurden miteinander verbunden und an dem Verbindungspunkt wurde eine modifizierte Feder-Waage angebracht. Die Zugrichtung der Federwaage verlief in der Mittelachse des Wickelkerns vom Aufnahme-Mechanismus fort.

Bei einem Wickelkern 15 nach Figur 1 mit jedem Federelement 11 zugeordnetem einen Begrenzersteg 13 mußten ca. 6 kp Zugkraft bis zum Abzug des Wickelkerns aufgewendet werden.

Bei einem Wickelkern 20 nach Figur 2 mit drei Begrenzeranschlägen 16 wurden bei ca. b = 0,2 mm Schlitzbreite ca. 5 kp Abzugskraft benötigt.

Im Vergleich dazu wurde bei einem Wickelkern 5 nach Figur 4 ohne jegliche Begrenzerelemente eine sehr niedrige Abzugskraft von ca. 4 kp gemessen.

Die Dicke der Federelemente, die außer der "etwa S-Form" der Elemente 11 auch weitere geeignete Formen aufweisen können, wie im DE-GM 9400220 beschrieben und dargestellt, sollte mindestens etwa 0,6 mm betragen, Normaldicke ca. 1,0 mm, sowie sollte eine Breite aufweisen, die im wesentlichen der Breite der Wickelfläche 18 entspricht.

Die Umfangsteile 11A der "etwa S-Form"-Federelemente können z.B. zu einem Radius des Wickelkerns in einem Winkelbereich von ca. 85° bis ca. 95° angeordnet sein.

Durch Optimierung lassen sich die Werte der Abzugskräfte der erfindungsgemäßen Wickelkerne 15 und 20 sicher noch erhöhen. Es konnte damit jedenfalls eine erhebliche Erhöhung der Abzugskräfte um ca. 50 bzw. 25 % gegenüber dem Vergleichs-Wickelkern 5 festgestellt werden.

Es ist möglich, geeignete Stegformen zusammen mit geeigneten thermoplastischen Materialien, die im Spritzgießverfahren verarbeitbar sind, zu verwenden. Derartige Thermoplaste müssen keine Füllstoffe wie Glasfasern, Glaskugeln und andere verstärkende Füllstoffe enthalten.

Für Wickelkerne gemäß vorliegender Erfindung sind Thermoplaste im allgemeinen, insbesondere die nachstehend aufgeführten Thermoplaste geeignet:

Polystyrol, ABS (Acrylnitril/Butadien/Styrol-Copolymere) (z.B. Typ BASF 456 M schlagfest)

Mischung aus Polybutylenterephthalat mit einem Polycarbonat

PVC (Polyvinylchlorid)

Polyamid.

Bei der Bewicklung der Wickelkerne 5, 15 und 25 mit Magnetband hat sich ein Kompressionsverhältnis von

$$\frac{\Delta Di =}{\Delta Da} = \frac{1}{4}$$

Di = Durchmesser des Innenrings
Da = Durchmesser des Außenrings

als maximal tolerierbar erwiesen, weil sich dabei die Wickelkerne nach dem Bewickeln noch von der Achse abziehen ließen, auf der der Wickelkern bei sehr hohen Wickelgeschwindigkeiten mit dem Bandwickel versehen wurde.

Um das Abziehen der Wickelkerne mit den darauf befindlichen Bandwickeln weiter zu vereinfachen, ist ein Verhältnis von 1:5 noch weitaus besser.

Die erfindungsgemäßen Wickelkerne 15 und 20 oder ähnliche Ausführungen besitzen darüber hinaus noch den Vorteil, daß beim Abwickeln der Magnetbänder beim Kunden der Wickelkern sich nicht unbeabsichtigt vom Aufspann- und Spulmechanismus lösen kann und Störungen verursacht.

Ein Wickelkern für Bandinformationsträger ist mit Federelementen zwischen Innen- und Außenring ausgebildet zur Bereitstellung eines Kompressionsverhältnisses vom Innen- zum Außendurchmesser von weniger als 1:4. Zur Erhöhung der Haltekräfte des Wickelkerns beim Spulen sind den Federelementen radial wirkende Begrenzerelemente zugeordnet.

**Patentansprüche**

1. Wickelkern für streifen- oder bandförmige Informationsträger, wobei die Breite der äußeren Wickelfläche (18) des Wickelkerns wenigstens der Breite des Informationsträgers entspricht, der Wickelkern aus einem Außen- und einem Innenring (12 bzw. 10) besteht, die radial miteinander durch elastisch verformbare, radial und in Umfangsrichtung verlaufende Feder) elemente (11) verbunden sind, um eine relative Bewegung des Außenringes (12) gegenüber dem Innenring (10), in dessen Umfangsrichtung zu unterbinden, und der Wickelkern einen Innen- und Außenumfang mit einem Innen- bzw. Außendurchmesser besitzt, wobei der Wickelkern (5, 15, 20) beim Aufwickeln des Informationsträgers ein Kompressionsverhältnis des komprimierten Innendurchmessers ($\Delta Di$) zum komprimierten Außendurchmesser ($\Delta Da$) von weniger als 1:4 aufweist, gekennzeichnet durch Begrenzerelemente (13, 16), die zentralsymmetrisch angeordnet sind und im wesentlichen radial wirken und mittels der Begrenzerelemente (13) die Federwirkung zumindest eines Teils der Federelemente (11) verkleinert wird, so daß im Falle einer Durchmesservergrößerung des Innenringes (10) diese begrenzt wird.

2. Wickelkern nach Anspruch 1, dadurch gekennzeichnet, daß bei einer definierten Durchmesservergrößerung des Innenringes (10) mittels der Begrenzerelemente (16) eine Abstützung des Innenringes (10) zum Außenring (12) hergestellt ist.

3. Wickelkern nach Anspruch 1, dadurch gekennzeichnet, daß die Federelemente aus im wesentlichen S-förmigen Stegen (11) mit einem Umfangsteil (11A) und Radialteilen (11B) an den Enden bestehen.

4. Wickelkern nach Anspruch 3, dadurch gekennzeichnet, daß der Umfangsteil (11A) der S-förmigen Stege (11) im Winkelbereich von etwa 85° bis etwa 95° relativ zu einem Radius des Wickelkerns (5, 15, 20) angeordnet ist.

5. Wickelkern nach einem oder mehreren der Ansprüche 1, 3 oder 4, dadurch gekennzeichnet, daß das Begrenzerelement als Begrenzersteg (13) ausgebildet ist, der den in Umfangsrichtung verlaufenden Umfangsteil (11A) des Federelements (11) mit dem Innenring (10) verbindet.

6. Wickelkern nach einem oder beiden der Ansprüche 1 und 2, dadurch gekennzeichnet, daß das Begrenzerelement als Begrenzeranschlag (16) ausgebildet ist, der am Innen- oder Außenring (10 bzw. 12) vorgesehen ist.

7. Wickelkern nach einem oder beiden der Ansprüche 1 oder 2, dadurch gekennzeichnet, daß das Begrenzerelement als Begrenzeranschläge (16A, 16B) ausgebildet sind, die am Außen und am Innenring (12 bzw. 10) vorgesehen sind.

8. Wickelkern nach Anspruch 5 und 6 oder 5 und 7, dadurch gekennzeichnet, daß Begrenzerstege (13) vorgesehen sind die jeweils den in Umfangsrichtung verlaufenden Umfangsteil (11A) des Federelements (11) mit dem Innenring (10) oder Außenring (12) verbinden und daß außerdem Begrenzeranschläge (16A, 16B) vorgesehen sind, die am Innen- und/oder am Außenring (10 bzw. 12) vorgesehen sind.

9. Wickelkern nach einem der Ansprüche 6 bis 8, dadurch gekennzeichnet, daß zwischen dem einen Begrenzeranschlag (16, 16A, 16B) und dem gegenüberliegenden Wickelkernteil ein Schlitz (17,17') mit einer Schlitzbreite zwischen etwa 0,15 und etwa 0,4 mm vorgesehen ist.

10. Wickelkern nach einem der Ansprüche 3 bis 5 oder 8, dadurch gekennzeichnet, daß durch unterschiedliche Anordnungen der Begrenzerstege (13, 13A, 13B) über die Länge des Umfangsteils (11A) zwischen den Radialteilen (11B) die Federkonstante des Federelements (11) einstellbar ist.

11. Wickelkern nach einem oder mehreren der Ansprüche 1 bis 10, gekennzeichnet durch eine durch 3 teilbare Anzahl von Federelementen (11).

12. Wickelkern nach einem oder mehreren der Ansprüche 1 bis 11, gekennzeichnet durch ein thermoplastisches Material ohne oder mit höchstens geringem Füllstoffanteil.

13. Wickelkern nach einem oder mehreren der Ansprüchen 1 bis 12, dadurch gekennzeichnet, daß die Dicke der Begrenzerelemente (13, 16) etwa der halben Dicke der Federelemente (11) entspricht.

14. Wickelkern nach Anspruch 1 und 11, dadurch gekennzeichnet, daß die Anzahl der Begrenzerelemente (13, 16) durch 3 teilbar ist.

15. Wickelkern nach Anspruch 1 und einem oder mehreren der Ansprüche 5 bis 7, dadurch gekennzeichnet, daß jedem Federelement (11) wenigstens ein Begrenzerelement (13) zugeordnet ist.

16. Wickelkern nach Anspruch 1 und einem oder beiden der Ansprüche 2 und 8, dadurch gekennzeichnet, daß wenigstens drei als Begrenzeranschläge (16, 16A, 16B) ausgebildete Begrenzerelemente vorgesehen sind.

17. Wickelkern nach einem oder mehreren der Ansprüche 1 bis 16, dadurch gekennzeichnet, daß der Innenring (10) teilweise hohl ausgebildet und mit Verstärkungsstegen (19, 21) versehen ist, deren Anzahl sich an der Zahl der Federelemente (11) orientiert oder ein Mehrfaches davon beträgt.

**Claims**

1. A winding hub for information carriers in strip or tape form, the width of the outer winding surface (18) of the winding hub corresponding at least to the width of the information carrier, the winding hub comprising an outer ring (12) and an inner ring (10), which are radially interconnected by elastically deformable spring elements (11) running radially and in the circumferential direction, in order to prevent a relative movement of the outer ring (12) with respect to the inner ring (10) in the circumferential direction of the latter, and the winding hub having an inner and outer circumference with an inner and outer diameter, respectively, the winding hub (5, 15, 20) having a compression ratio of the compressed inner diameter ($\Delta Di$) to the compressed outer diameter ($\Delta Da$) of less than 1:4 during winding up of the information carrier, which winding hub comprises limiter elements (13, 16) which are arranged in a centrally symmetrical manner and act substantially radially and the spring action of at least some of the spring elements (11) is reduced by means of the limiter elements (13) so that, in the case of an enlargement of the diameter of the inner ring (10), the enlargement is limited.

2. The winding hub as claimed in claim 1, wherein, in the event of a defined enlargement of the diameter of the inner ring (10), a supporting of the inner ring (10) with respect to the outer ring (12) is established by means of the limiter elements (16).

3. The winding hub as claimed in claim 1, wherein the spring elements comprise substantially S-shaped webs (11) with a circumferential part (11A) and radial parts (11B) at the ends.

4. The winding hub as claimed in claim 3, wherein the circumferential part (11A) of the S-shaped webs (11) is arranged in the angular range of about 85° to about 95° relative to a radius of the winding hub (5, 15, 20).

5. The winding hub as claimed in one or more of claims 1, 3 or 4, wherein the limiter element is designed as a limiter web (13) which connects the circumferential part (11A) of the spring element (11), running in the circumferential direction, to the inner ring (10).

6. The winding hub as claimed in one or both of claims 1 and 2, wherein the limiter element is designed as a limiter stop (16) which is provided on the inner ring (10) or outer ring (12).

7. The winding hub as claimed in one or both of claims 1 and 2, wherein the limiter element is designed as limiter stops (16A, 16B) which are provided on the outer ring (12) and on the inner ring (10).

8. The winding hub as claimed in claims 5 and 6 or 5 and 7, wherein limiter webs (13) are provided, which in each case connect the circumferential part (11A), running in the circumferential direction, of the spring element (11) to the inner ring (10) or outer ring (12) and wherein limiter stops (16A, 16B) are additionally provided, which are provided on the inner ring (10) and/or on the outer ring (12).

9. The winding hub as claimed in claims 6 to 8, wherein a slit (17, 17') having a slit width of between about 0.15 and about 0.4 mm is provided between the one limiter stop (16, 16A, 16B) and the opposite winding hub part.

10. The winding hub as claimed in one of claims 3 to 5 or 8, wherein the spring constant of the spring element (11) can be set by different arrangements of the limiter webs (13, 13A, 13B) over the length of the circumferential part (11A) between the radial parts (11B).

11. The winding hub as claimed in one or more of claims 1 to 10, which comprises a number divisible by 3 of spring elements (11).

12. The winding hub as claimed in one or more of claims 1 to 11, which comprises a thermoplastic material without any or at most with a small filler content.

13. The winding hub as claimed in one or more of claims 1 to 12, wherein the thickness of the limiter elements (13, 16) corresponds approximately to half the thickness of the spring elements (11).

14. The winding hub as claimed in claims 1 and 11, wherein the number of limiter elements (13, 16) is divisible by 3.

15. The winding hub as claimed in claim 1 and one or more of claims 5 to 7, wherein each spring element (11) is assigned at least one limiter element (13).

16. The winding hub as claimed in claim 1 and one or both of claims 2 and 8, wherein at least three limiter elements designed as limiter stops (16, 16A, 16B) are provided.

17. The winding hub as claimed in one or more of claims 1 to 16, wherein the inner ring (10) is of a partially hollow design and is provided with reinforcing webs (19, 21), the number of which approximates to the number of spring elements (11) or is a multiple thereof.

**Revendications**

1. Noyau d'enroulement pour supports d'information en forme de ruban ou de bande, la largeur de la surface extérieure d'enroulement (18) de ce noyau d'enroulement correspondant au moins à la largeur du support d'information, ce noyau d'enroulement étant constitué d'un anneau extérieur (12) et d'un anneau intérieur (10) qui sont reliés radialement par des éléments élastiques (11) s'étendant radialement et dans la direction circonférentielle et déformables élastiquement, pour juguler un mouvement relatif de l'anneau extérieur (12) par rapport à l'anneau intérieur (10) dans la direction circonférentielle de celui-ci, et ce noyau d'enroulement ayant un pourtour intérieur et un pourtour extérieur ayant respectivement un diamètre intérieur et un diamètre extérieur, le noyau d'enroulement (5, 15, 20) présentant, lors de l'enroulement du support d'information, un rapport de compression du diamètre intérieur comprimé ($\Delta$Di) au diamètre extérieur comprimé ($\Delta$Da) inférieur à 1/4, caractérisé par des éléments limiteurs (13, 16) qui sont disposés avec symétrie de révolution et agissent sensiblement radialement, et par le fait que ces éléments limiteurs (13) réduisent l'action élastique au moins d'une partie des éléments élastiques (11), de sorte que dans le cas d'une augmentation de diamètre de l'anneau intérieur (10), celle-ci est limitée.

2. Noyau d'enroulement selon la revendication 1, caractérisé par le fait que, dans le cas d'une augmentation définie de diamètre de l'anneau intérieur (10), au moyen des éléments limiteurs (16) est réalisé un calage de l'anneau intérieur (10) vis-à-vis de l'anneau extérieur (12).

3. Noyau d'enroulement selon la revendication 1, caractérisé par le fait que les éléments élastiques sont constitués de barrettes sensiblement en forme de S (11) qui ont une partie circonférentielle (11A) et des parties radiales (11B) à leurs extrémités.

4. Noyau d'enroulement selon la revendication 3, caractérisé par le fait que la partie circonférentielle (11A) des barrettes en forme de S (11) est située dans un domaine angulaire d'environ 85° à environ 95° relativement à un rayon du noyau d'enroulement (5, 15, 20).

5. Noyau d'enroulement selon une ou plusieurs des revendications 1, 3 et 4, caractérisé par le fait que l'élément limiteur est constitué d'une barrette limiteuse (13) qui relie la partie circonférentielle s'étendant dans la direction circonférentielle (11A) de l'élément élastique (11) à l'anneau intérieur (10).

6. Noyau d'enroulement selon l'une des revendications 1 et 2 ou les deux, caractérisé par le fait que l'élément limiteur est constitué d'une butée limiteuse (16) prévue sur l'anneau intérieur (10) ou l'anneau extérieur (12).

7. Noyau d'enroulement selon l'une des revendications 1 et 2 ou les deux, caractérisé par le fait que l'élément limiteur est constitué de butées limiteuses (16A, 16B) prévues sur l'anneau extérieur (12) et sur l'anneau intérieur (10).

8. Noyau d'enroulement selon les revendications 5 et 6 ou 5 et 7, caractérisé par le fait qu'il est prévu des barrettes limiteuses (13) qui relient la partie circonférentielle s'étendant dans la direction circonférentielle (11A) de l'élément élastique (11) à l'anneau intérieur (10) ou à l'anneau extérieur (12), et il est en outre prévu des butées limiteuses (16A, 16B) sur l'anneau intérieur (10) et/ou sur l'anneau extérieur (12).

9. Noyau d'enroulement selon l'une des revendications 6 à 8, caractérisé par le fait qu'entre une butée limiteuse (16, 16A, 16B) et la partie opposée du noyau d'enroulement est prévue une fente (17, 17') de largeur comprise entre environ 0,15 mm et environ 0,4 mm.

10. Noyau d'enroulement selon l'une des revendications 3 à 5 ou 8, caractérisé par le fait qu'on peut, par des placements différents des barrettes limiteuses (13, 13A, 13B) sur la longueur de la partie circonférentielle (11A) située entre les parties radiales (11B), régler la constante d'élasticité de l'élément élastique (11).

11. Noyau d'enroulement selon une ou plusieurs des revendications 1 à 10, caractérisé par un nombre divisible par 3 d'éléments élastiques (11).

12. Noyau d'enroulement selon une ou plusieurs des revendications 1 à 11, caractérisé par une matière thermoplastique sans matière de charge ou avec peu de celle-ci.

13. Noyau d'enroulement selon une ou plusieurs des revendications 1 à 12, caractérisé par le fait que l'épaisseur des éléments limiteurs (13, 16) correspond à peu près à la moitié de l'épaisseur des éléments élastiques (11).

14. Noyau d'enroulement selon les revendications 1 et 11, caractérisé par le fait que le nombre d'éléments limiteurs (13, 16) est divisible par 3.

15. Noyau d'enroulement selon la revendication 1 et une ou plusieurs des revendications 5 à 7, caractérisé par le fait qu'à chaque élément élastique (11) est associé au moins un élément limiteur (13).

16. Noyau d'enroulement selon la revendication 1 et une des revendications 2 et 8 ou les deux, caractérisé par le fait qu'il est prévu au moins trois éléments limiteurs constitués de butées limiteuses (16, 16A, 16B).

17. Noyau d'enroulement selon une ou plusieurs des revendications 1 à 16, caractérisé par le fait que l'anneau intérieur (10) est en partie creux et pourvu de barrettes de renfort (19, 21) dont le nombre s'oriente sur le nombre d'éléments élastiques (11) ou est un multiple de celui-ci.

# FIG.1A

# FIG.1B

# FIG.1C

FIG.2

## FIG.2A

## FIG.2B

# FIG.3

15´(20´)  B  16A  13  16B  19

# FIG.4